# EUROPEAN PATENT APPLICATION

(11) **EP 1 615 020 A1**
(43) Date of publication of application: **11.01.2006**
(21) Application number: 04425493.6
(22) Date of filing: 06.07.2004
(51) Int. Cl.: G01N 27/16, G01N 1/22, G01N 15/02, F02P 13/00, F02M 25/07

(54) **Method and device for detecting unburned gases and particulate in the flow of the exhaust gases of an internal combustion engine**

(71) Applicant: C.R.F. Società Consortile per Azioni, 10043 Orbassano (TO) (IT)
(72) Inventor: Pizzi, Marco, 10100 Torino (IT)
(74) Representative: Notaro, Giancarlo

(57) **Abstract**

A device for detecting unburnt gases and/or particulate matter in the flow of exhaust gases of an internal-combustion engine comprises a plurality of substrates set on top of one another (7, 8, 9) having a progressive filtering capacity, associated to which are respective pairs of microfilaments. Only one of the two microfilaments of each pair is coated with a catalyst. The two microfilaments are supplied with electric current and are voltage-controlled so as to maintain them at a substantially constant temperature. The variation of voltage that becomes necessary on the microfilament provided with catalyst indicates the concentration of the exhaust gases in the dimensional range selected by the respective filtering layer.

## Description

The present invention relates to a method and a device for detecting unburnt gases and/or particulate matter in the flow of exhaust gases of an internal-combustion engine.

There has already been proposed in the past (US-A-5 834 627) the use of sensors of combustible gases in various applications, including that of detecting a mixture of unburnt hydrocarbons in the exhaust gases of a motor vehicle, in which there is envisaged the provision of a first electrically conductive microfilament and of a second electrically conductive microfilament within a space exposed to the flow of the gases, in which only one of said microfilaments is coated with a catalyst. In operation, the microfilaments are heated to the same temperature by traversing them with an electric current. The control circuit supervises the resistance of the two microfilaments and regulates continuously the supply to each filament for maintaining the resistance, and consequently the temperature, at a constant value. If the microfilaments are exposed to a combustible gas, the microfilament provided with catalyst gives rise to a combustion thereon that produces an additional supply of heat. The power of electric supply to the filament with catalyst which has the function of maintaining the temperature at the aforesaid constant value decreases, consequently giving rise to a signal indicating the concentration of gases.

The purpose of the present invention is to provide a device of the type indicated above that is suited also for providing selective information on the dimensional ranges of the particles contained in the exhaust fumes.

With a view to achieving said purpose, the subject of the present invention is a device comprising:
- a first electrically conductive microfilament and a second electrically conductive microfilament, which can be positioned within a space exposed to the flow of the exhaust gases;
- a temperature sensor associated to each microfilament; and
- electronic control means, for supplying an electric current to the aforesaid microfilaments, maintaining them substantially at a constant temperature and one sufficient for generating combustion of the unburnt gases on the filament provided with catalyst,
   said electronic control means being programmed for varying the supply voltage of the two filaments with a feedback control, for the purpose of maintaining their temperature substantially constant, and for monitoring the variation of supply voltage of the microfilament provided with catalyst with respect to that of the other microfilament so as to obtain a signal indicating the concentration of unburnt gases and of particulate matter,
   said device being characterized in that there is provided a pair of microfilaments of the type indicated above on a plurality of substrates set on top of one another, said substrates being shaped for forming filters that are progressively selective to the passage of particulate matter in such a way that the pair of microfilaments of each substrate will be able to provide an indication of the concentration of particles that correspond to a given selected dimensional range.

In a preferred embodiment, the temperature sensor associated to each filament is a thin-film thermocouple.

Furthermore, preferably, according to the invention there is provided for each substrate a matrix of microfilaments for the purpose of detecting a plurality of parameters from: concentration of unburnt hydrocarbons; concentration of particulate matter (in the case of diesel engines); flow of exhaust gases; concentration of oxygen; and sensing of temperature.

According to a further important characteristic of the invention, the microfilaments are pre-arranged in the exhaust manifold of an internal-combustion engine.

According to a variant embodiment, which is also important, a pair of microfilaments is instead provided directly in each cylinder of the engine. Said solution makes it possible to identify in a precise way the quality of the combustion and to act immediately in closed circuit on the means for injection, ignition (in the case of petrol engines), on the system of exhaust-gas recirculation (EGR), and on possible systems of active control of the valves for regulating the engine

In particular, for the EGR system it is possible to design and use a filament capable of burning particulate matter, and hence measuring it. In conjunction with a spectrometric NOₓ sensor, it is thus possible to obtain complete control of the critical parameters for an optimal use of the EGR system or an active control of the valves, for the purpose of enabling also a reuse of the exhaust gases directly within each cylinder (the so-called "internal EGR").

In the preferred embodiment, the filtering substrates, on which there are then positioned the pairs of microfilaments, are porous structures, for example consisting of anodized porous alumina or other structures obtained using technologies of micromachining, such as D.R.I.E. (Deep Reactive Ion Etching) or injection moulding, after prior fabrication of the master using photolithographic techniques or classic D.R.I.E. techniques. The catalyst may, for example, be palladium or platinum.

Further characteristics and advantages of the invention will emerge from the ensuing description, with reference to the annexed drawings, which provided purely by way of non-limiting example, and in which:
- Figure 1 is a schematic view of an internal-combustion engine provided with a system according to the invention; and
- Figure 2 is a cross-sectional view at an enlarged scale of an embodiment of the device according to the invention.

With reference to the drawings, a device 1 according to the invention can be provided, for example in the exhaust manifold 2 of an internal-combustion engine 3 having a plurality of cylinders 4. Given the low cost of the device, it is also possible to envisage provision of the device directly within each cylinder of the engine, for the purpose of enabling an extremely prompt detection of the characteristics of combustion, with the consequent possibility of regulating various parameters of operation of the engine, including the EGR system of exhaust-gas recirculation or a possible system of active control of the valves, such as an electronically controlled hydraulic system of the type that has formed the subject of various patents filed in the name of the present applicant. The device 1 comprises in its simplest embodiment at least one pair of microfilaments, to each of which there is associated a thin-wire thermocouple, designed to send to an electronic control unit 5 a signal 6 indicating the temperature of each microfilament. It is, however, also possible to control the system without thermocouple. In turn, the control unit 5 is able to supply an electric current to the two microfilaments with a feedback control for the purpose of maintaining the temperature of the two microfilaments substantially constant. As has already been said, one of the two microfilaments is coated with a catalyst and kept at a temperature sufficient for triggering a combustion of the unburnt gases contained in the flow of exhaust gases G. The control is performed by varying the supply voltage so as to maintain the temperature constant. As has also already been indicated, the control unit 5 is able to detect the variation of voltage necessary for maintaining the temperature of the filament provided with catalyst constant with respect to the temperature necessary for the other microfilament and derive therefrom, by means of calculation, an indication of the concentration of the unburnt gases.

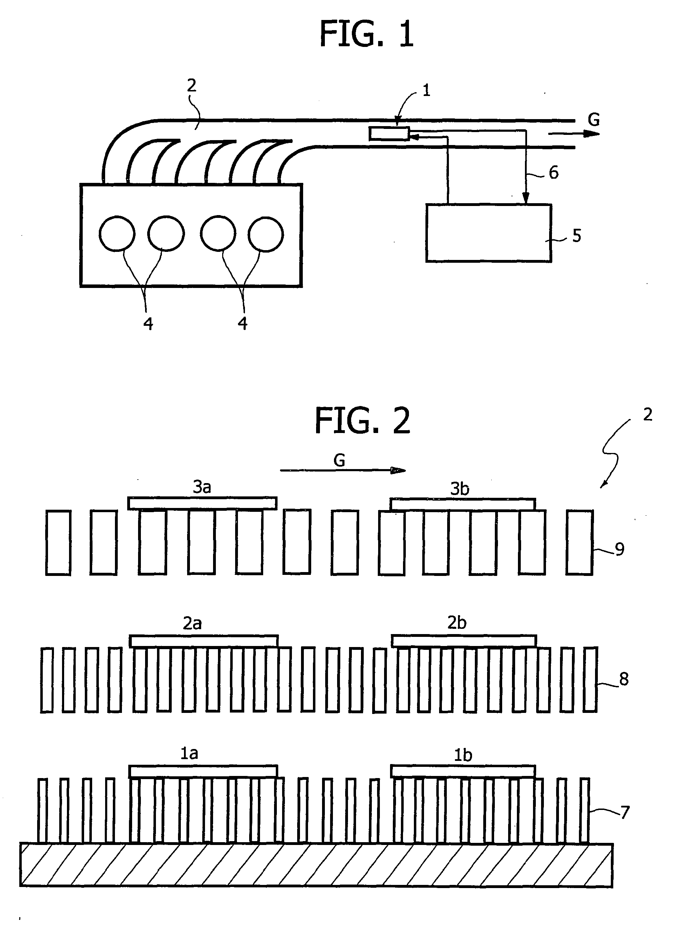

With reference to Figure 2, the essential characteristic of the invention lies in the fact that a number of pairs of microfilaments 1a, 1b; 2a, 2b, 3a, 3b are provided on different filtering substrates 7, 8, 9. The filtering substrates 7, 8, 9 have a porous structure that is progressively selective, in the sense that the microfilaments 3a, 3b are exposed to the entire flow of the gases G, whilst the filaments 2a, 2b are exposed only to the contents of the gas that manages to pass through the coarsest filter 9, whilst the microfilaments 1a, 1b are exposed to the part of the gases that manages to pass through the finer filter 8. In the drawing, for reasons of simplicity, the microfilaments are represented as resting on the surface, but in actual fact they coat the pores of the structure, with consequent increase in the active surface and increase in the sensitivity of the sensor. The parts used as sensor are supplied by some areas but in actual fact, even though it is electrically independent, also the rest of the surface is coated with catalyst for periodic cleaning of the filter by burning the residue that clogs the pores by means of catalytic combustion. The reference filament may be made of non-catalytic material or else insulated by means of an insulating coating so as not to bring about combustion on the surface in conditions of normal operation, but only during cleaning by means of an oversupply or by means of auxiliary electrodes.

As already indicated above, the porous structures can be formed by anodized porous alumina or other structures obtained using micromachining technologies, such as D.R.I.E. or injection moulding, after prior fabrication of the master with photolithographic techniques and classic D.R.I.E. techniques. The catalyst can, for example, be palladium or platinum.

As already indicated above, in the preferred embodiment, the temperature sensor associated to each microfilament is a thin-film thermocouple.

For the use of the filaments in the combustion chamber it is necessary to supply them in a pulsed way, appropriately synchronised with the rate of rotation of the engine in order to prevent phenomena of preignition. In particular, the filament must be kept at a temperature lower than the one necessary for triggering the catalytic combustion by the input of the new air/fuel mixture up to ignition, whether controlled ignition or pressure ignition.

Of course, without prejudice to the principle of the invention, the details of construction and the embodiments may vary with respect to what is described and illustrated herein purely by way of example.

## Claims

1. A device for detecting unburnt gases and/or particulate matter in the flow of exhaust gases of an internal-combustion engine, comprising:
- a first electrically conductive microfilament and a second electrically conductive microfilament (1a, 1b; 2a, 2b; 3, 3b) only one of which is coated with a catalyst;
- a temperature sensor associated to each microfilament; and
- electronic control means for supplying electric current to the aforesaid microfilaments, maintaining them at a substantially constant temperature, sufficient for generating combustion of the unburnt gases on the microfilament provided with catalyst,
said electronic control means being programmed for varying the supply voltage of the two microfilaments, with a feedback control, for the purpose of maintaining substantially constant the temperature of the two microfilaments, and for monitoring the variation of supply voltage on the microfilament provided with catalyst with respect to the other microfilament so as to obtain a signal indicating the concentration of the exhaust gases and of particulate matter,
said device being **characterized in that** it comprises a plurality of pairs of said first and second microfilaments arranged on a number of substrates (7 8, 9) set on top of one another, having a porous filtering structure shaped in such a way that said substrates perform a progressively finer filtering of the exhaust gases for the purpose of using the microfilaments carried thereby to give an indication of the concentration of the particles contained in the exhaust gases in different dimensional ranges selected.

2. The device according to Claim 1, **characterized in that** the sensor associated to each microfilament is a thin-film thermocouple.

3. The device according to Claim 1, **characterized in that** each substrate (7, 8, 9) has a porous structure made of anodized porous alumina or other structure obtained with micromachining technologies, such as D.R.I.E. or injection moulding.

4. The device according to Claim 1, **characterized in that** the catalyst is chosen between palladium and platinum.

5. A method for detecting unburnt gases and particulate matter in the flow of exhaust gases of an internal-combustion engine, comprising:
- providing a first electrically conductive microfilament and a second electrically conductive microfilament within a space exposed to the flow of the exhaust gases, in which only one of said microfilaments is coated with a catalyst;
- associating to each microfilament a sensor of the temperature of the microfilament;
- supplying electric current to the aforesaid microfilaments, maintaining them at a substantially constant temperature, sufficient for generating combustion of the unburnt gases on the microfilament provided with catalyst;
- varying the supply voltage of the two microfilaments, with a feedback control, for the purpose of maintaining the temperature of the two microfilaments substantially constant; and
- monitoring the variation of supply voltage of the microfilament provided with catalyst with respect to that of the other microfilament so as to obtain a signal indicating the concentration of the unburnt gases and of particulate matter,
said method being **characterized in that** a number of pairs of microfilaments are provided on different substrates set on top of one another having a progressively increasing filtering capacity for the purpose of obtaining an indication of the concentration of the exhaust gases in the dimensional ranges selected.

6. The method according to Claim 5, **characterized in that** the aforesaid microfilaments are pre-arranged in the exhaust manifold of an internal-combustion engine.

7. The method according to Claim 5, **characterized in that** the aforesaid microfilaments are pre-arranged directly in each cylinder of the engine.

8. The method according to Claim 7, **characterized in that** the aforesaid electronic control means are designed to intervene on means for regulation of the engine, including a system for recirculation of exhaust gases or a system for active control of the valves of the engine, according to the signals indicating the concentration of the unburnt gases thus obtained.

9. A device for detecting unburnt gases and/or particulate matter in the flow of exhaust gases of an internal-combustion engine, comprising:
- a first electrically conductive microfilament and a second electrically conductive microfilament (1a, 1b; 2a, 2b; 3, 3b), only one of which is coated with a catalyst;
- a temperature sensor associated to each microfilament; and
- electronic control means for supplying electric current to the aforesaid microfilaments, maintaining them at a substantially constant temperature, sufficient for generating combustion of the unburnt gases on the microfilament provided with catalyst,
said electronic control means being programmed for varying the supply voltage of the two microfilaments, with a feedback control, for the purpose of maintaining substantially constant the temperature of the two microfilaments and for monitoring the variation of supply voltage on the microfilament provided with catalyst with respect to the other microfilament so as to obtain a signal indicating the concentration of exhaust gases and of particulate matter,
said device being **characterized in that** the sensor associated to each microfilament is a thin-film thermocouple.

10. An internal-combustion engine, comprising a plurality of cylinders and at least one device for detecting unburnt gases and/or particulate matter in the flow of exhaust gases at output from the various cylinders, in which said device comprises:
- a first electrically conductive microfilament and a second electrically conductive microfilament (1a, 1b; 2a, 2b; 3, 3b), only one of which is coated with a catalyst;
- a temperature sensor associated to each microfilament; and
- electronic control means for supplying electric current to the aforesaid microfilaments, maintaining them at a substantially constant temperature, sufficient for generating combustion of the unburnt gases on the microfilament provided with catalyst,
said electronic control means being programmed for varying the supply voltage of the two microfilaments, with a feedback control, for the purpose of maintaining substantially constant the temperature of the two microfilaments and for monitoring the variation of supply voltage on the microfilament provided with catalyst with respect to the other microfilament so as to obtain a signal indicating the concentration of exhaust gases and of particulate matter,
said engine being **characterized in that** it is provided with a pair of said microfilaments within each cylinder.

11. The engine according to Claim 10, **characterized in that** it comprises electronic control means that control one or more systems for regulation of the engine, such as an exhaust-gas recirculation (EGR) system or a system for active control of the valves of the engine according to the aforesaid signal indicating the concentration of the unburnt gases at the engine exhaust.
